Europäisches Patentamt

European Patent Office

Office européen des brevets

(11) Publication number : **0 482 833 A2**

(12) # EUROPEAN PATENT APPLICATION

(21) Application number : 91309620.2

(22) Date of filing : 17.10.91

(51) Int. Cl.[5] : **C08L 77/00**, C08L 71/00, C08K 3/22

(30) Priority : 24.10.90 GB 9023188

(43) Date of publication of application :
29.04.92 Bulletin 92/18

(84) Designated Contracting States :
AT BE CH DE DK ES FR GB GR IT LI LU NL SE

(71) Applicant : BICC Public Limited Company
Devonshire House Mayfair Place
London W1X 5FH (GB)

(72) Inventor : Dale, Martin John
Cherry Tree Cottage
Marston Montgomery, Derbyshire DE6 2FF
(GB)
Inventor : Hare, Andrew
4 Parkwood Close
Basingstoke, Hampshire (GB)
Inventor : Fordham, Ian Laurence
3 new Cottages, Stocklatch
Malpas, Cheshire SY14 7BS (GB)

(74) Representative : Poole, Michael John
BICC plc Group Patents & Licensing Dept.
Quantum House Maylands Avenue
Hemel Hempstead, Hertfordshire HP2 4SJ
(GB)

(54) Polymer compositions.

(57)   Polymer compositions suitable, *inter alia,* for use as a sheathing materials in making electric cables are thermoplastic, halogen-free and flame retardant, with low-smoke-and-fume properties. They have at 20°C a tensile strength of at least 5MN/m$^2$, a secant modulus less than 25MN/m$^2$ for extension from 0 to 10% and a tear strength of at least 6kN/m, and which exhibits after exposure for 28 days at 50°C to OX28 hydraulic fluid a linear swell not greater than 15%. The compositions comprise, in parts by weight
  a 100 parts of polymer of which more than 25 but less than 75% (by weight) is an elastomeric segmented polyether-polyamide and the balance is a terpolymer of ethylene with an acrylic ester and a third monomer containing at least one free carboxylic acid group (for example the polymers sold as PEBAX and VAMAC respectively),
  b 110 to 200 parts of alumina trihydrate filler with a B E T surface area at least 4m$^2$/g but less than 12 m$^2$/g, and
  c an effective stabiliser system and optionally other conventional minor ingredients.

EP 0 482 833 A2

Jouve, 18, rue Saint-Denis, 75001 PARIS

This invention relates to new polymer compositions suitable, *inter alia,* for use as a sheathing material in making electric cables. Such compositions require physical toughness and flexibility, preferably without requiring crosslinking, and often need to combine good flame retardance with freedom from production of dark smoke or of choking and/or corrosive fumes (such as hydrogen halides) if they are involved in a fire; it is also desirable that they resist exposure to oils and other fluids. Such a combination of properties is not easily achieved, even by the use of very expensive materials.

In accordance with the present invention, a halogen-free flame retardant, low-smoke and fume, thermoplastic polymer composition having at 20°C a tensile strength of at least $5MN/m^2$, a secant modulus less than $25MN/m^2$ for extension from 0 to 10% and a tear strength of at least 6kN/m, and which exhibits after exposure for 28 days at 50°C to OX28 hydraulic fluid a linear swell not greater than 15%, the composition comprising, in parts by weight

a 100 parts of polymer of which more than 25 but less than 75% (by weight) is an elastomeric segmented polyether-polyamide and the balance is a terpolymer of ethylene with an acrylic ester and a third monomer containing at least one free carboxylic acid group,

b 110 to 200 parts of alumina trihydrate filler with a B E T surface area at least $4m^2/g$ but less than $12m^2g$

c an effective stabiliser system and optionally other conventional minor ingredients.

Suitable elastomeric segmented polyether-polyamides are commercially available under the trademark **PEBAX.** These are understood to be based on polyamide blocks derived from 12-aminodecanoic acid (or its lactam) and polyether segments derived from 1,4-butanediol. Various softness grades are available, and we recommend those with a modulus of elasticity in flexure according to ASTM D 790 of less than 200 (and preferably less than 100) MPa and a melting point less than 170°C, the latter limit in order to allow direct mixing of the filler without risk of premature release of water.

Suitable terpolymers are commercially available under the trademark **VAMAC;** the grade sold as VAMAC G, which is free from additives and is the grade normally used in the cable industry, is much preferred. It is thought that the desirable properties of the compositions of this invention may be due in part to the formation of ionic crosslinks (salt formation) between free acid groups of the terpolymer and basic nitrogen groups in the segmented polyether-polyamide, but the performance of the invention is not dependant on the correctness of this theory and the applicants do not wish to be bound by it.

Suitable filler grades of alumina trihydrate are readily available; low-electrolyte grades are much preferred as offering both significantly better electrical properties and also better retention of mechanical properties, especially when exposed to water. If desired a reinforcing grade of alumina trihydrate with a B E T surface area of over $10m^2/g$ may be blended with a semireinforcing grade with a B E T surface area of less than $5m^2/g$; this may in some cases facilitate achieving the required tear strength.

Conventional antioxidant systems can be used, and need to be chosen in the usual way according to the colour of the composition, since the most effective systems tend to stain. Optional minor ingredients, apart from colourants, include release agents such as zinc stearate and/or certain silicone polymers.

The invention includes electric cables sheathed with the compositions defined.

Examples

Compositions as detailed in the Table below were made up using specified amounts of PEBAX 3533 and VAMAC G terpolymer as already defined, a first low-electrolyte alumina trihydrate supplied by BACO Chemicals Ltd under the designation SF11E having a B E T surface area of $11m^2/g$ and/or a second low-electrolyte alumina trihydrate supplied by BACO Chemicals Ltd under the designation SF4E and having a B E T surface area of $4m^2/g$ with the addition in all cases of 5 parts of a pigment grade carbon black and of a conventional synergistic antioxidant system and silicone and zinc stearate processing aids. Numbered examples are examples of the invention: lettered examples are for comparison.

The compositions shown in the Table were made up using a 1.6 litre Banbury (internal) mixer into which the two polymers and the stabilisers were introduced at room temperature and mixed for one minute. The fillers and pigment were now added and mixing continued until the temperature reached 100°C (several minutes). At this point the processing aids were added and mixing continued until the temperature reached 145°C, with a short interruption for sweeping down the mixer at 120°C. The mix was dumped onto a 2-roll mill, sheeted off and then extruded using a Brabender Extrusiograph set at 140°C to form strip with nominal dimensions 50mm wide by 1.5mm thick. After conditioning for 24 hours, specimens cut from this strip were tested for tensile strength, elongation, tear strength, Mooney Viscosity (ML1+5), resistance to OX28, DERV and water, and secant modulus for extension from 0 to 10%; the results are included in the table.

### <u>TABLE</u> - Part 1

| Example | | A | B | C | D | E |
|---|---|---|---|---|---|---|
| PEBAX 3533 | | 75 | 25 | 25 | 75 | 75 |
| VAMAC G | | 25 | 75 | 75 | 25 | 25 |
| SF 11E | | 140 | 0 | 140 | 100 | 0 |
| SF 4E | | 0 | 120 | 0 | 0 | 140 |
| TENSILE STRENGTH $(MN/m^2)$ | | 13.4 | 3.8 | 8.1 | 11.0 | 8.1 |
| ELONGATION AT BREAK (%) | | 146.8 | 649.1 | 284.9 | 257.6 | 194.5 |
| TEAR STRENGTH (kN/m) | | 6.4 | 11.3 | 11.8 | 18.1 | 18.8 |
| MOONEY | 160°C | 37 | 27 | 48 | 25 | 28 |
| VISCOSITY | 150°C | 44 | 31 | 53 | 32 | 37 |
| | 140°C | 69 | 44 | 69 | 54 | 70 |
| | 130°C | 121 | 58 | 89 | 99 | 127 |
| OX-28 28 DAYS/50°C: | | | | | | |
|    VOLUME SWELL % | | 26.8 | 163 | 112.2 | 32.7 | 30.9 |
|    LINEAR SWELL | | 7 | 29 | 24 | 7 | 7 |
|    RETAINED TENSILE | | 66.9 | 13.3 | 9.1 | 71.6 | 73.2 |
|    RETAINED ELONGATION | | 166.4 | 16.1 | 22.7 | 143.3 | 210.8 |
| DERV 28 DAYS/23°C | | | | | | |
|    VOLUME SWELL | | 28.6 | 41.7 | 39.5 | 30.9 | 25.4 |
|    LINEAR SWELL | | 7 | 11 | 9 | 8 | 5 |
|    RETAINED TENSILE | | 64 | 33.9 | 32.9 | 70 | 74 |
|    RETAINED ELONGATION | | 133.6 | 71 | 72.5 | 193.2 | 261.7 |
| DISTILLED WATER 28 DAYS/50°C | | | | | | |
|    VOLUME SWELL | | 3.1 | 5 | 7.4 | 1.4 | 2.9 |
|    LINEAR SWELL | | 0 | 1 | 1 | 0 | 0 |
|    RETAINED TENSILE | | 73.6 | 115.5 | 90 | 82.5 | 97.3 |
|    RETAINED ELONGATION | | 76.5 | 97.4 | 108.8 | 79.3 | 80.1 |
| SECANT MODULUS $(MN/m^2)$ | | | | | | |
|    10% EXTN | | 26.3 | 5.2 | 12.1 | 25.8 | 28.9 |

**TABLE - Part 2**

| Example | | 1 | 2 | F | G | 3 |
|---|---|---|---|---|---|---|
| PEBAX 3533 | | 50 | 50 | 75 | 25 | 50 |
| VAMAC G | | 50 | 50 | 25 | 75 | 50 |
| SF 11E | | 70 | 120 | 60 | 100 | 0 |
| SF 4E | | 70 | 0 | 60 | 0 | 100 |
| TENSILE STRENGTH $(MN/m^2)$ | | 9.0 | 9.6 | 9.8 | 5.3 | 6.4 |
| ELONGATION AT BREAK (%) | | 234.6 | 294.0 | 240.6 | 469.5 | 770.4 |
| TEAR STRENGTH (kN/m) | | 15.6 | 14.7 | 14.4 | 14.3 | 14.7 |
| MOONEY | 160°C | 34 | 36 | 25 | 27 | 22 |
| VISCOSITY | 150°C | 44 | 42 | 33 | 32 | 26 |
| | 140°C | 65 | 58 | 65 | 41 | 47 |
| | 130°C | 99 | 93 | 103 | 59 | 71 |
| OX-28 28 DAYS 50°C: | | | | | | |
|     VOLUME SWELL % | | 52.6 | 53.4 | 30.9 | 127.7 | 66 |
|     LINEAR SWELL | | 11 | 12 | 8 | 25 | 15 |
|     RETAINED TENSILE | | 46.3 | 44.8 | 73.7 | 18.2 | 63.9 |
|     RETAINED ELONGATION | | 172.7 | 107.8 | 161.8 | 26.6 | 64.9 |
| DERV 28 DAYS/23°C: | | | | | | |
|     VOLUME SWELL | | 29.4 | 34.3 | 25.9 | 39.7 | 33.1 |
|     LINE SWELL | | 7 | 8 | 7 | 8 | 8 |
|     RETAINED TENSILE | | 54.4 | 51.2 | 71.8 | 41 | 81.2 |
|     RETAINED ELONGATION | | 179.7 | 139.9 | 187.2 | 130.3 | 90.1 |
| DISTILLED WATER 28 DAYS/50°C: | | | | | | |
|     VOLUME SWELL | | 6.3 | 3.9 | 3.2 | 7 | 5.7 |
|     LINEAR SWELL | | 0 | 0 | 0 | 0 | 0 |
|     RETAINED TENSILE | | 84.5 | 87.3 | 92.9 | 91.8 | 97.6 |
|     RETAINED ELONGATION | | 87.7 | 82.8 | 87.1 | 104.3 | 80.5 |
| SECANT MODULUS $(MN/m^2)$ | | | | | | |
|     10% EXTN | | 16.0 | 20.0 | 28.2 | 7.8 | 13.4 |

## TABLE - Part 3

| Example | | 4 | H | J | K | L |
|---|---|---|---|---|---|---|
| PEBAX 3533 | | 50 | 25 | 25 | 75 | 25 |
| VAMAC G | | 50 | 75 | 75 | 25 | 75 |
| SF 11E | | 0 | 70 | 50 | 0 | 120 |
| SF 4E | | 140 | 70 | 50 | 120 | 0 |
| TENSILE STRENGTH $(MN/m^2)$ | | 5.8 | 6.3 | 3.9 | 9.2 | 6.4 |
| ELONGATION AT BREAK (%) | | 222.2 | 321.1 | 792.7 | 337.4 | 462.8 |
| TEAR STRENGTH (kN/m) | | 17.2 | 16.9 | 10.4 | 18.1 | 17.5 |
| MOONEY | 160°C | 32 | 38 | 25 | 22 | 36 |
| VISCOSITY | 150°C | 39 | 43 | 27.5 | 29 | 40.5 |
| | 140°C | 59 | 57 | 39 | 58 | 52 |
| | 130°C | 91 | 77 | 55 | 102 | 74 |
| OX-28 28 DAYS/50°C: | | | | | | |
| VOLUME SWELL % | | 57 | 109.8 | 149.8 | 32.2 | 111.6 |
| LINEAR SWELL | | 12 | 21 | 25 | 8 | 21 |
| RETAINED TENSILE | | 56.2 | 15.8 | 22 | 65.8 | 17.9 |
| RETAINED ELONGATION | | 174 | 39.6 | 19.4 | 105.8 | 31 |
| DERV 28 DAYS/50°C: | | | | | | |
| VOLUME SWELL | | 29.5 | 32.6 | 36 | 27.3 | 37.9 |
| LINEAR SWELL | | 7 | 7 | 8 | 7 | 8 |
| RETAINED TENSILE | | 59.1 | 36.9 | 49.1 | 65.3 | 36.3 |
| RETAINED ELONGATION | | 168.4 | 86.4 | 71.9 | 116.7 | 113.4 |
| DISTILLED WATER 28 DAYS/50°C: | | | | | | |
| VOLUME SWELL | | 4.8 | 8.6 | 11.3 | 3.4 | 5.4 |
| LINEAR SWELL | | 0 | 1 | 1 | 1 | 0 |
| RETAINED TENSILE | | 119.2 | 86.5 | 127 | 93.3 | 91.8 |
| RETAINED ELONGATION | | 110.6 | 107 | 88.2 | 57.9 | 86.2 |
| SECANT MODULUS $(MN/m^2)$ | | | | | | |
| 10% EXTN | | 18.3 | 10.4 | 6.9 | 29.0 | 9.7 |

## Claims

1. A halogen-free, flame retardant, low-smoke-and-fume, thermoplastic polymer composition having at 20°C a tensile strength of at least 5MN/m$^2$, a secant modulus less than 25MN/m$^2$ for extension from 0 to 10% and a tear strength of at least 6kN/m, and which exhibits after exposure for 28 days at 50°C to OX28 hydraulic fluid a linear swell not greater than 15%, the composition comprising, in parts by weight a 100 parts of polymer of which more than 25 but less than 75% (by weight) is an elastomeric segmented polyether-polyamide and the balance is a terpolymer of ethylene with an acrylic ester and a third monomer containing at least one free carboxylic acid group,
b 110 to 200 parts of alumina trihydrate filler with a B E T surface area at least 4m²/g but less than 12 m²/g.
c an effective stabiliser system and optionally other conventional minor ingredients.

2.  A composition as claimed in claim 1 which the elastomeric segmented polyether-polyamide is based on polyamide blocks derived from 12-aminodecanoic acid (or its lactam) and polyether segments derived from 1, 4-butanediol.

3.  A composition as claimed in claim 2 in which the elastomeric segmented polyether-polyamide has a modulus of elasticity in flexure according to ASTM D 790 of less than 200.

4.  A composition as claimed in claim 2 in which the elastomeric segmented polyether-polyamide has a modulus of elasticity in flexure according to ASTM D 790 of less than 100.

5.  A composition as claimed in any one of claims 2 - 4 in which the elastomeric segmented polyether-polyamide has a melting-point less than 170°C.

6.  A composition as claimed in any one of claims 1 - 5 in which the alumina trihydrate is a low-electrolyte grade.

7.  A composition as claimed in any one of the preceding claims comprising a reinforcing grade of alumina trihydrate with a B E T surface area of over 10m²/g and a semireinforcing grade of aluminia trihydrate with a B E T surface area of less than 5m²/g.

8.  An electric cable sheathed with the composition claimed in any one of the preceding claims.